# EUROPEAN PATENT APPLICATION

(11) **EP 2 846 541 A1**
(43) Date of publication of application: **11.03.2015**
(21) Application number: 13800808.1
(22) Date of filing: 03.06.2013
(51) Int. Cl.: H04N 7/18

(54) **VIDEO MONITORING SYSTEM AND METHOD FOR REDUCING PAN-TILT CONTROL DELAY**

(30) Priority: 06.06.2012 CN 201210184746
(71) Applicant: ZTE Corporation, Shenzhen, Guangdong 518057 (CN)
(72) Inventor: DAI, Lijian, Shenzhen Guangdong 518057 (CN)
(74) Representative: Cabinet Laurent & Charras
(86) International application number: PCT/CN2013/076623
(87) International publication number: WO 2013/182017

(57) **Abstract**

The embodiment of the present invention provides a method and system for a video monitoring system to reduce pan-tilt control delay. After receiving a pan-tilt control request sent by a user through a terminal, a pan-tilt control unit of a front-end device searches a local cache to authenticate the pan-tilt control request, if the authentication result is that the pan-tilt control request is permitted, then it operates a pan-tilt according to the pan-tilt control request and returns an operation result to the terminal.

## Description

### Technical Field

The present invention relates to the video monitoring field, and in particular, to a video monitoring system and a method to reduce the pan-tilt control delay.

### Background of the Related Art

The video monitoring, as an important component of the security field, has already been applied to all trades and professions extensively; and whether for finance, traffic, commerce, public security or house, the video monitoring has played an important role. With the fast development of the technology, such as, computer, network transmission and image processing, etc., the application of the video monitoring in the modem life is more and more extensive, and the demand becomes greater and greater.

The display terminals of the video monitoring system include video walls, desk-top displays, mobile terminals, etc., and the users generally need to perform an operation related to the pan-tilt control before the display terminal, so as to achieve an objective of changing the video monitor area. Now when the users perform a pan-tilt operation on the display terminal, they all send the pan-tilt control requests of the users to a video monitoring platform. After the video monitoring platform receives the pan-tilt control request of the terminal, the user request is authenticated. If the authentication is not passed, then the pan-tilt control request of the user is refused; if the authentication is passed, then a corresponding signaling transformation is performed on the pan-tilt control request of the user, and then the request is sent to a front-end device. Because, for the pan-tilt control of the user, corresponding transition and signaling transformation needs to be performed by the video monitoring platform every time, it causes the situation that the delay of the pan-tilt control is greater, which is unfavorable to the user operation.

### Summary of the Invention

The embodiment of the present invention provides a method for a video monitoring system to reduce pan-tilt control delay, to solve the problem that the delay is greater during the pan-tilt control.

A method for a video monitoring system to reduce pan-tilt control delay provided by an embodiment of the present invention comprises:
after receiving a pan-tilt control request sent by a user through a terminal, a pan-tilt control unit of a front-end device searching a local cache to authenticate the pan-tilt control request; when the authentication result is that the pan-tilt control request is permitted, then operating a pan-tilt according to the pan-tilt control request, and returning an operation result to the terminal.

The above-mentioned method further can have the following characteristics: searching a local cache to authenticate the pan-tilt control request comprises:
searching the local cache for whether there is authentication information of the user, when there is the authentication information of the user in the local cache, then the authentication result being that the pan-tilt control request is permitted, and when there is no authentication information of the user in the local cache, the authentication being failed.

The above-mentioned method further can have the following characteristics: the method further comprises:
when the authentication for the pan-tilt control request by the pan-tilt control unit is failed, then sending the pan-tilt control request to a video monitoring platform;
after the video monitoring platform receives the pan-tilt control request, authenticating the pan-tilt control request, when the authentication result is that the pan-tilt control request is permitted, then sending the pan-tilt control request to the pan-tilt control unit; and
after the pan-tilt control unit receives the pan-tilt control request, operating the pan-tilt, and returning the operation result to the terminal.

The above-mentioned method further can have the following characteristics: the method further comprises:
when the video monitoring platform sends the pan-tilt control request to the pan-tilt control unit, further sending the authentication information of the user to the pan-tilt control unit; and
after the pan-tilt platform controls and receives the authentication information, storing the authentication information in the cache, which is used for authenticating the pan-tilt control of the user request subsequently.

The above-mentioned method further can have the following characteristics: the method further comprises:
after the authentication for the pan-tilt control request by the video monitoring platform is failed, returning the operation result of the pan-tilt to the terminal.

The embodiment of the present invention further provides a video monitoring system, comprising a front-end device, wherein, the front-end device comprises a pan-tilt control unit, wherein:
the pan-tilt control unit is configured to: after receiving a pan-tilt control request sent by a user through a terminal, search a local cache to authenticate the pan-tilt control request; when an authentication result is that the pan-tilt control request is permitted, then operate a pan-tilt according to the pan-tilt control request, and return an operation result to the terminal.

The above-mentioned system further can have the following characteristics: the pan-tilt control unit is configured to search a local cache to authenticate the pan-tilt control request by means of:
searching the local cache for whether there is authentication information of the user, when there is the authentication information of the user in the local cache, then the authentication result being that the pan-tilt control request is permitted, and when there is no authentication information of the user in the local cache, the authentication being failed.

The above-mentioned system further can have the following characteristics: the system further comprises a video monitoring platform, wherein:
the pan-tilt control unit is further configured to: after the authentication for the pan-tilt control request is failed, send the pan-tilt control request to the video monitoring platform; and after receiving the pan-tilt control request sent by the video monitoring platform when the authentication result is that the pan-tilt control request is permitted, operate the pan-tilt, and return the operation result to the terminal; and
the video monitoring platform is configured to: after receiving the pan-tilt control request, authenticate the pan-tilt control request, and when the authentication result is that the pan-tilt control request is permitted, then send the pan-tilt control request to the pan-tilt control unit.

The above-mentioned system further can have the following characteristics: the video monitoring platform is further configured to: when sending the pan-tilt control request to the pan-tilt control unit, send the authentication information of the user to the pan-tilt control unit; and
the pan-tilt control unit is further configured to: after receiving the authentication information, store the authentication information in the cache, which is used for authenticating the pan-tilt control of the user request subsequently.

The above-mentioned system further can have the following characteristics: the video monitoring platform is further configured to: after the authentication for the pan-tilt control request is failed, return the operation result of the pan-tilt to the terminal.

Compared with a traditional video monitoring pan-tilt control system, the system of the embodiment of the present invention can cache the pan-tilt control request of the user, authentication and transition operations need to be performed in the video monitoring platform only when the user performs the pan-tilt control for the first time. The pan-tilt control request later can be sent to the front-end device directly, while does not need to be authenticated through the video monitoring platform, so as to reduce the delay of the pan-tilt control in the video monitoring. Therefore, the method and system provided by the embodiment of the present invention reduce the delay in a video recording channel switchover in video monitoring.

### Brief Description of Drawings

FIG. 1 is a system structure diagram provided by an embodiment of the present invention;
FIG. 2 is flow chart 1 of a video monitoring front-end device processing a user pan-tilt request provided by an embodiment of the present invention;
FIG. 3 is flow chart 2 of a video monitoring front-end device processing a user pan-tilt request provided by an embodiment of the present invention.

### Preferred Embodiments of the Invention

The embodiment of the present invention is described in detail with reference to the accompanying drawings hereinafter. It should be illustrated that, in the case of not conflicting, the embodiments in the present application and features in these embodiments can be combined with each other arbitrarily.

The embodiment of the present invention provides a method and system to reduce the pan-tilt control delay in the video monitoring system. The users all send the pan-tilt control request to the front-end device directly every time the user requests the pan-tilt control; after the pan-tilt control unit of the front-end device receives the pan-tilt control request, it authenticates and transforms the pan-tilt control request; if the result of the authentication for the pan-tilt control request is that the pan-tilt control request is permitted, then the pan-tilt control unit performs a corresponding transformation on the pan-tilt control request, and sends out a final pan-tilt control signal, so as to perform the pan-tilt operation; if the pan-tilt control request authentication is failed, then it sends the pan-tilt control request to the video monitoring platform, and the video monitoring platform performs the authentication and the signaling transformation; and then the video monitoring platform sends the pan-tilt control request and the authentication result to the front-end device after the result of the authentication by the video monitoring platform is that the pan-tilt control request is permitted, and the front-end device will cache the authentication result; in this way, when the user performs the pan-tilt control request again next time, it does not need to authenticate and transform through the video monitoring platform, and the pan-tilt control unit of the front-end device can be used directly for the authentication and the signaling transformation operation.

The embodiment of the present invention provides a method for a video monitoring system to reduce pan-tilt control delay, including the following steps.

After receiving a pan-tilt control request sent by a user through a terminal, a pan-tilt control unit of a front-end device searches a local cache to authenticate the pan-tilt control request; if an authentication result is that the pan-tilt control request is permitted, then it operates a pan-tilt according to the pan-tilt control request, and returns an operation result to the terminal.

Wherein, searching a local cache to authenticate the pan-tilt control request includes:
searching the local cache for whether there is authentication information of the user; when there is the authentication information of the user in the local cache, the authentication result is that the pan-tilt control request is permitted, and when there is no authentication information of the user in the local cache, the authentication is failed.

Wherein, the method further includes:
if the authentication for the pan-tilt control request by the pan-tilt control unit is failed, sending the pan-tilt control request to a video monitoring platform;
after the video monitoring platform receives the pan-tilt control request, authenticating the pan-tilt control request, if the authentication result is that the pan-tilt control request is permitted, sending the pan-tilt control request to the pan-tilt control unit; and
after the pan-tilt control unit receives the pan-tilt control request, operating the pan-tilt, and returning the operation result to the terminal.

Wherein, the method further includes:
when the video monitoring platform sends the pan-tilt control request to the pan-tilt control unit, further carrying the authentication information of the user; and
after the pan-tilt platform controls and receives the authentication information, storing the authentication information in the cache, which is used for authenticating the pan-tilt control of the user request subsequently.

Wherein, the method further includes:
after the authentication for the pan-tilt control request by the video monitoring platform is failed, returning a pan-tilt operation result to the terminal.

The embodiment of the present invention further provides a video monitoring system, including a front-end device, wherein, the front-end device includes a pan-tilt control unit, wherein:
the pan-tilt control unit is configured to: after receiving a pan-tilt control request sent by a user through a terminal, search a local cache to authenticate the pan-tilt control request; if an authentication result is that the pan-tilt control request is permitted, operate a pan-tilt according to the pan-tilt control request, and return an operation result to the terminal.

Wherein, that the pan-tilt control unit searches a local cache to authenticate the pan-tilt control request, includes the following steps.

It is to search the local cache for whether there is authentication information of the user; when there is the authentication information of the user in the local cache, the authentication result is that the pan-tilt control request is permitted, and when there is no authentication information of the user in the local cache, the authentication is failed.

Wherein, the system further includes a video monitoring platform, wherein:
the pan-tilt control unit is further configured to: after the authentication for the pan-tilt control request is failed, send the pan-tilt control request to the video monitoring platform; and after receiving the pan-tilt control request sent by the video monitoring platform when the authentication result is that the pan-tilt control request is permitted, operate the pan-tilt, and return the operation result to the terminal; and
the video monitoring platform is configured to: after receiving the pan-tilt control request, authenticate the pan-tilt control request, and if the authentication result is that the pan-tilt control request is permitted, send the pan-tilt control request to the pan-tilt control unit.

Wherein, the video monitoring platform is further configured to: when sending the pan-tilt control request to the pan-tilt control unit, carry the authentication information of the user; and
the pan-tilt control unit is further configured to: after receiving the authentication information, store the authentication information in the cache, which is used for authenticating the pan-tilt control of the user request subsequently.

Wherein, the video monitoring platform is further configured to: after the authentication for the pan-tilt control request is failed, return the operation result of the pan-tilt to the terminal.

The present invention is illustrated through the specific embodiment hereinafter.

The implementation steps of the front-end device processing the pan-tilt control request are as follows.
1). the user views the monitoring information through the display terminal, and performs the pan-tilt control to change a monitoring area, and the terminal sends the pan-tilt control request of the user to the front-end device.
2). after the pan-tilt control unit of the front-end device receives the pan-tilt control request of the user, the pan-tilt control unit searches for the stored cache information, authenticates the pan-tilt control request, and judges whether the user is legal. If it is legal, then step (3) is performed; if it is illegal, then step (4) is performed.

Preferably, the local cache can be searched for whether there is the authentication information of the user; when there is the authentication information of the user in the local cache, then the result of the authentication is that the pan-tilt control request is permitted; when there is no authentication information of the user in the local cache, then the authentication is failed.
3). after the result of the authentication by the pan-tilt control unit is that the pan-tilt control request is permitted, the pan-tilt control unit processes the pan-tilt control request, operates the pan-tilt, and returns the operation result to the user.
4). after the authentication by the pan-tilt control unit is failed, the pan-tilt control unit sends the pan-tilt control request to the video monitoring platform for processing.
5). after the video monitoring platform receives the pan-tilt control request, it authenticates the pan-tilt control request. If the authentication is failed, then the pan-tilt control operation result back is returned to the user; and if the authentication result is that the pan-tilt control request is permitted, then step (6) is performed.
6). after the result of the authentication by the video monitoring platform is that the pan-tilt control request is permitted, the pan-tilt control request carrying the authentication information of the user is sent to the pan-tilt control unit of the front-end device.
7). after the pan-tilt control unit receives the pan-tilt control request sent by the video monitoring platform, when fmding that the authentication information is carried in the pan-tilt control request, the authentication information is stored into the cache of the pan-tilt control unit, which is used for the authentication when the user requests next time.

The authentication information includes contents such as the user name, the user IP information, a last operating time of the user, etc.

The storage time of the authentication information in the pan-tilt control unit can be a set time, such as, one day, and after the set time is exceeded, the cache content is expired, and it needs to be updated again.

Certainly, the authentication information can be stored in the pan-tilt control unit in advance by other means as well.
8). the pan-tilt control unit processes the pan-tilt control request, operates the pan-tilt and returns the operation result to the user.

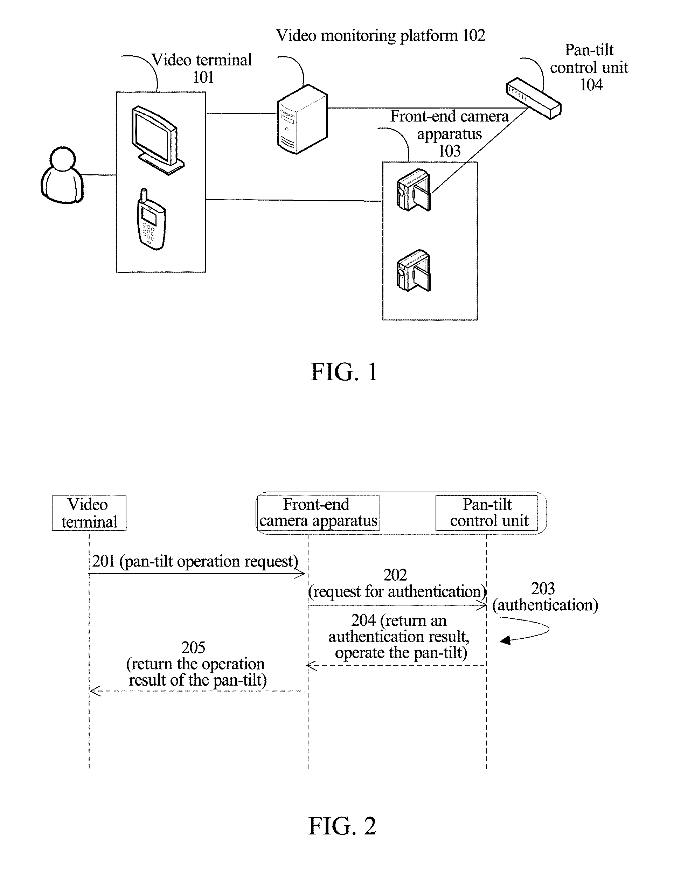

As shown in FIG. 1, it is a structure diagram of a video monitoring system provided by the embodiment of the present invention, including: a video terminal 101, a video monitoring platform 102, a front-end camera apparatus 103, and a pan-tilt control unit 104, wherein, the front-end camera apparatus 103 and the pan-tilt control unit 104 are located in the front-end device.

The user can log on a video monitoring system portal through the video terminal 101 (including the computer or the mobile phone).

The video monitoring platform 102 is configured to process the pan-tilt control request from the pan-tilt control unit, and can return the processing result back to the user or the pan-tilt control unit of the front-end camera apparatus.

The front-end camera apparatus 103 includes multiple combinations of a camera device and a probe. Both the camera device and the probe have controllable functions. The type and the combination mode of the camera device and the probe are not limited. Different camera devices and probes can be selected and combined in different ways according to user requirement and usage scene.

The pan-tilt control unit 104 is configured to process the pan-tilt control request from the terminal, for example, when receiving the pan-tilt control request of the terminal for the first time, the pan-tilt control unit needs to forward the pan-tilt control request to the video monitoring platform; when receiving the pan-tilt control request subsequently, it can authenticate directly according to the cache information stored in the local before, operate the pan-tilt and return the operation result to the terminal.

As shown in FIG. 2, when requesting the pan-tilt operation for the user, the pan-tilt control unit of the front-end device already stores the cache information of the user, and the user authentication information of the user does not need to be processed through the video monitoring platform. The specific steps include:
In step 201, the user performs the pan-tilt control on the video terminal, such as, the monitoring device, the mobile phone, and the video terminal sends the pan-tilt control request to the front-end camera apparatus.
In step 202, after the front-end camera apparatus receives the pan-tilt control request, it sends the pan-tilt control request to the pan-tilt control unit for authentication.
In step 203, the pan-tilt control unit authenticates the pan-tilt control request according to the cache information stored before.
In step 204, after the result of the authentication by the pan-tilt control unit is that the pan-tilt control request is permitted, the authentication result is returned to the front-end camera apparatus, and the pan-tilt is operated.
In step 205, the front-end camera apparatus returns the pan-tilt control operation result to the video terminal, and indicates the operation result to the user.

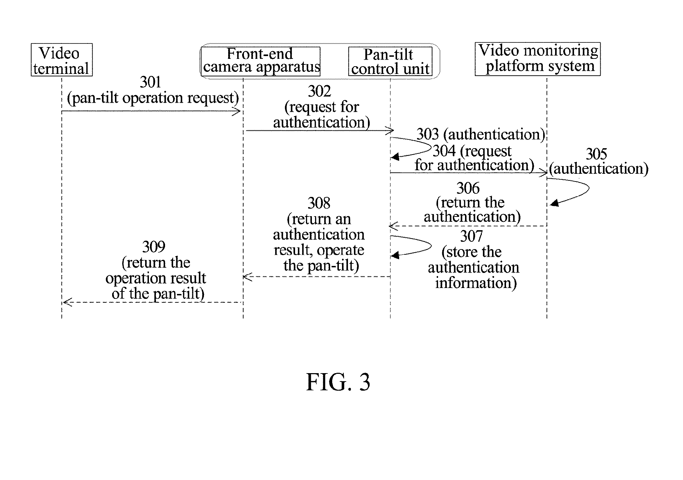

As shown in FIG. 3, when requesting the pan-tilt operation for the user, the pan-tilt control unit of the front-end device does not store the cache information of the user, and the authentication information of the user needs to be processed through the video monitoring platform. The specific steps include:
In step 301, the user performs the pan-tilt control on the video terminal, such as, the monitoring device, the mobile phone.
In step 302, after the front-end camera apparatus receives the pan-tilt control request, it sends the pan-tilt control request to the pan-tilt control unit for authentication.
In step 303, the pan-tilt control unit authenticates the pan-tilt control request according to the cache information stored before.
In step 304, the authentication by the pan-tilt control unit is failed, the pan-tilt control request is forwarded to the video monitoring platform to ask for authentication.
In step 305, the video monitoring platform authenticates the pan-tilt control request.
In step 306, the video monitoring platform returns the authentication result to the pan-tilt control unit.
In step 307, the pan-tilt control unit stores the authentication information of the pan-tilt control request into the cache, which will be used for the authentication during the next pan-tilt control request.
In step 308, after the result of the authentication by the pan-tilt control unit is that the pan-tilt control request is permitted, the authentication result is returned to the front-end camera apparatus, and the pan-tilt is operated.
In step 309, the front-end camera apparatus returns the pan-tilt control operation result to the video terminal, and indicates the operation result to the user.

In the embodiment of the present invention, the pan-tilt control unit is added in the front-end device, so that the pan-tilt control information of the user every time does not need to be authenticated and processed through the video monitoring platform, while it is directly forwarded to the front-end device, which reduces the delay time of the pan-tilt control greatly and raises the usability of the user.

The above description is only for the preferred embodiments of the present invention and is not intended to limit the present invention. For those skilled in the art, the present invention can have various modifications and variations. All of modifications, equivalents and/or variations without departing from the spirit and essence of the present invention should be embodied in the scope of the appended claims of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in a form of hardware, or in a form of software function module. The present invention is not limit to any specific form of the combination of the hardware and software.

### Industrial Applicability

Compared with a traditional video monitoring pan-tilt control system, the system of the embodiment of the present invention can cache the pan-tilt control request of the user, authentication and transition operations need to be performed in the video monitoring platform only when the user performs the pan-tilt control for the first time. The pan-tilt control request later can be sent to the front-end device directly, while does not need to be authenticated through the video monitoring platform, so as to reduce the delay of the pan-tilt control in the video monitoring. Therefore, the method and system provided by the embodiment of the present invention reduce the delay in a video recording channel switchover in video monitoring.

## Claims

1. A method for a video monitoring system to reduce pan-tilt control delay, comprising:
after receiving a pan-tilt control request sent by a user through a terminal, a pan-tilt control unit of a front-end device searching a local cache to authenticate the pan-tilt control request; when an authentication result is that the pan-tilt control request is permitted, operating a pan-tilt according to the pan-tilt control request, and returning an operation result to the terminal.

2. The method according to claim 1, wherein, searching a local cache to authenticate the pan-tilt control request comprises:
searching the local cache for whether there is authentication information of the user, when there is the authentication information of the user in the local cache, the authentication result being that the pan-tilt control request is permitted, and when there is no authentication information of the user in the local cache, the authentication being failed.

3. The method according to claim 1 or 2, further comprising:
when the authentication for the pan-tilt control request by the pan-tilt control unit is failed, sending the pan-tilt control request to a video monitoring platform;
after the video monitoring platform receives the pan-tilt control request, authenticating the pan-tilt control request, when the authentication result is that the pan-tilt control request is permitted, sending the pan-tilt control request to the pan-tilt control unit; and
after the pan-tilt control unit receives the pan-tilt control request, operating the pan-tilt, and returning the operation result to the terminal.

4. The method according to claim 3, further comprising:
when the video monitoring platform sends the pan-tilt control request to the pan-tilt control unit, further sending the authentication information of the user to the pan-tilt control unit; and
after the pan-tilt platform controls and receives the authentication information, storing the authentication information in the cache, which is used for authenticating the pan-tilt control of the user request subsequently.

5. The method according to claim 3, further comprising:
after the authentication for the pan-tilt control request by the video monitoring platform is failed, returning the operation result of the pan-tilt to the terminal.

6. A video monitoring system, comprising a front-end device, wherein, the front-end device comprises a pan-tilt control unit, wherein:
the pan-tilt control unit is configured to: after receiving a pan-tilt control request sent by a user through a terminal, search a local cache to authenticate the pan-tilt control request; when an authentication result is that the pan-tilt control request is permitted, operate a pan-tilt according to the pan-tilt control request, and return an operation result to the terminal.

7. The system according to claim 6, wherein, the pan-tilt control unit is configured to search a local cache to authenticate the pan-tilt control request by means of:
searching the local cache for whether there is authentication information of the user, when there is the authentication information of the user in the local cache, the authentication result being that the pan-tilt control request is permitted, and when there is no authentication information of the user in the local cache, the authentication being failed.

8. The system according to claim 6 or 7, further comprising a video monitoring platform, wherein:
the pan-tilt control unit is further configured to: after the authentication for the pan-tilt control request is failed, send the pan-tilt control request to the video monitoring platform; and after receiving the pan-tilt control request sent by the video monitoring platform when the authentication result is that the pan-tilt control request is permitted, operate the pan-tilt, and return the operation result to the terminal; and
the video monitoring platform is configured to: after receiving the pan-tilt control request, authenticate the pan-tilt control request, and when the authentication result is that the pan-tilt control request is permitted, then send the pan-tilt control request to the pan-tilt control unit.

9. The system according to claim 8, wherein,
the video monitoring platform is further configured to: when sending the pan-tilt control request to the pan-tilt control unit, send the authentication information of the user to the pan-tilt control unit; and
the pan-tilt control unit is further configured to: after receiving the authentication information, store the authentication information in the cache, which is used for authenticating the pan-tilt control of the user request subsequently.

10. The system according to claim 8, wherein,
the video monitoring platform is further configured to: after the authentication for the pan-tilt control request is failed, return the operation result of the pan-tilt to the terminal.
